(19) 

**Europäisches Patentamt**

**European Patent Office**

**Office européen des brevets**

(11) Veröffentlichungsnummer: **0 207 225**
**B1**

(12) **EUROPÄISCHE PATENTSCHRIFT**

(45) Veröffentlichungstag der Patentschrift:
**31.08.88**

(21) Anmeldenummer: **86103725.7**

(22) Anmeldetag: **19.03.86**

(51) Int. Cl.⁴: **B 65 G 47/48**

(54) **Komplettiervorrichtung.**

(30) Priorität: **31.05.85 DE 3519630**

(43) Veröffentlichungstag der Anmeldung:
**07.01.87 Patentblatt 87/2**

(45) Bekanntmachung des Hinweises auf die Patenterteilung:
**31.08.88 Patentblatt 88/35**

(84) Benannte Vertragsstaaten:
**AT BE CH DE FR GB IT LI NL SE**

(56) Entgegenhaltungen:
**DD-A-138 535**
**DE-A-2 650 917**
**DE-A-2 710 943**

(73) Patentinhaber: **DÜRKOPPWERKE GMBH, Nikolaus-Dürkopp- Strasse 10, D-4800 Bielefeld 1 (DE)**

(72) Erfinder: **Grube, Erwin, Linnenstrasse 120, D-4800 Bielefeld 18 (DE)**
Erfinder: **Schilling, Gerhard, Furtwänglerstrasse 33, D-4800 Bielefeld 1 (DE)**

(74) Vertreter: **Patentanwälte TER MEER - MÜLLER - STEINMEISTER, Artur- Ladebeck- Strasse 51, D-4800 Bielefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft eine Vorrichtung zum Komplettieren von aus mehreren zusammengehörigen Teilen bestehenden Erzeugnissen gemäß dem Oberbegriff des Patentanspruchs 1.

Bei der Herstellung von aus mehreren zusammengehörigen Teilen bestehenden Erzeugnissen ist es aus Gründen einer rationellen Fertigung vielfach erforderlich, daß die Teile an unterschiedlichen Orten und zu verschiedenen Zeiten hergestellt werden. Erst nach der Fertigstellung sämtlicher zu demselben Erzeugnis gehörenden Teile werden die zusammengehörigen Teile körperlich zusammengefügt. Dieser Vorgang des Zusammenfügens wird als Komplettieren bezeichnet.

Ein Beispiel für einen derartigen Produktionsablauf bildet die Herstellung von Anzügen, bei denen jeweils eine individuelle Zuordnung zwischen Jacken und Hosen besteht.

Bei einer herkömmlichen Komplettiervorrichtung werden die Teile mit Hilfe eines Förderers in ein Lager transportiert und dort von Hand zunächst unsortiert eingelagert. Anschließend werden die Teile durch das Personal anhand von Markierungen, beispielsweise anhand von auf Produktionsetiketten der Teile angebrachten Kontrollnummern, identifiziert, und zu jedem Teil werden von Hand die zu demselben Erzeugnis gehörenden Komplettierungsteile herausgesucht. Dieser Komplettiervorgang erfordert somit einen hohen Arbeits- und Zeitaufwand, da zum Auffinden der zu einem bestimmten Erzeugnis gehörenden Teile jeweils praktisch der gesamte Lagerbestand durchgesehen werden muß. Aufgrund der durch dieses zeitraubende Verfahren bedingten langen Verweildauer der Teile in dem Lager muß die Lagerkapazität so berechnet sein, daß die Aufnahme der gesamten Produktion möglich ist.

Der Erfindung liegt die Aufgabe zugrunde, den Arbeits- und Zeitaufwand für das Komplettieren mit einfachen Mitteln zu verringern

Die erfindungsgemäße Lösung dieser Aufgabe ist im Patentanspruch 1 angegeben.

Die Erfindung ermöglicht es, die eingehenden Teile durch Abtastung der Markierungen auf einfache Weise zu identifizieren und den aktuellen Lagerbestand in der elektronischen Steuereinheit zu registrieren, so daß zusammengehörigen Teilen jeweils derselbe Lagerplatz zugewiesen werden kann. Die auf diese Weise erhaltene Information über den Lagerplatz wird in der erfindungsgemäßen Vorrichtung auf zweifache Weise genutzt. Einerseits wird der Weitertransport der Förderwagen in die einzelnen Abteilungen des Lagers durch eine entsprechende Codierung der Förderwagen derart gesteuert, daß die Förderwagen jeweils in die Abteilung des Lagers gelangen, in der sich der betreffende Lagerplatz befindet. Auf diese Weise wird eine automatische Vorsortierung erreicht, und unnötige Laufwege innerhalb des Lagers werden vermieden. Die Codierung der Förderwagen erfolgt in der Reihenfolge der Registrierung der angelieferten Teile, so daß das Abtasten der Markierungen und die Codierung ggf. zeitversetzt vorgenommen werden können. Andererseits dient die Information über den Lagerplatz zur Steuerung des Etikettendruckers, so daß das in dem Lager arbeitende Personal anhand des an dem Teil anzubringenden Etiketts über den genauen Lagerplatz innerhalb der betreffenden Abteilung informiert wird. Da Zusammengehörige Teile denselben Lagerplatz bekommen, kann das Personal unmittelbar bei Eintreffen des letzten Teils eines Erzeugnisses erkennen, daß das betreffende Erzeugnis komplett ist. Das komplettierte Erzeugnis kann daher unverzüglich, d.h. ohne Zwischenlagerung des zuletzt eingetroffenen Teils, in ein Fertigwarenlager abtransportiert werden, so daß der betreffende Lagerplatz in dem Komplettierungslager wieder frei gemacht wird.

Durch die Kombination des Etikettendruckers mit der Einrichtung zur elektronischen Identifizierung und Registrierung der Teile und Zielsteuerung der Förderwagen wird somit eine beträchtliche Zeitersparnis erreicht, und die Lagerkapazität des Komplettierungslagers kann erheblich verringert werden. Beispielsweise ist bei der Komplettierung von aus zwei Teilen bestehenden Erzeugnissen eine Verringerung der Lagerkapazität um 50 % möglich, da jeweils nur das zuerst eintreffende Teil eingelagert werden muß.

Bei den aufgedruckten Etiketten handelt es sich vorzugsweise um Klebeetiketten, die nach Abschluß der Komplettierung leicht entfernt werden können.

Aus dem Dokument DD-A-138 535 ist bereits eine Vorrichtung zum Sortieren und Zwischenspeichern von Textilien oder dergleichen bekannt, die die im Oberbegriff des Anspruchs 1 angegebenen Merkmale aufweist. Diese Vorrichtung dient jedoch nicht zum Komplettieren von Bekleidungsstücken, sondern zum Sortieren, beispielsweise nach Konfektionsgrößen. Die einzelnen Abteilungen des Lagers entsprechen bei dieser Vorrichtung den verschiedenen Konfektionsgrößen, und die Förderwagen werden anhand der an den Bekleidungsstücken angebrachten Größenkennzeichnungen manuell derart codiert, daß die Bekleidungsstücke in die ihrer Größe entsprechende Abteilung des Lagers gelangen. Da die Bekleidungsstücke der selben Konfektionsgröße jedoch untereinander beliebig austauschbar sind, brauchen die Bekleidungsstücke nicht individuell identifiziert zu werden, und die Abteilungen des Lagers sind demgemäß nicht in einzelne Lagerplätze aufgeteilt.

In dem Dokument DE-A1-2 650 917 wird eine Sortiervorrichtung beschrieben, bei der in einer Codierstation der gewünschte Lagerplatz eines Kleidungsstückes von einer Bedienungsperson in einem Computer eingegeben wird, der dann die automatische Abgabe der Kleidungsstücke an den gewünschten Lagerplätzen steuert.

Ferner wird in dem Dokument DE-A1-2 710 943 eine Sortiervorrichtung für Kleidungsstücke, beispielsweise in einem chemischen Reinigungsbetrieb, beschrieben, bei der die Kleidungsstücke individuell identifiziert werden. Die Kleidungsstücke werden hier bei der Annahme fortlaufend numeriert und vor der Ausgabe automatisch wieder entsprechend der Nummernfolge sortiert.

Diese herkömmlichen Vorrichtungen eignen sich jedoch nicht für Komplettiervorgänge, bei denen jeweils mehrere zusammengehörige Teile der einzelnen Erzeugnisse zusammengeführt werden müssen.

Vorteilhafte Weiterbildungen und Ausgestaltungen der erfindungsgemäßen Komplettiervorrichtung sind in den Unteransprüchen angegeben.

Im folgenden wird ein bevorzugtes Ausführungsbeispiel der Erfindung anhand der Zeichnungen näher erläutert.

Fig. 1 ist eine Grundrißskizze einer erfindungsgemäßen Komplettiervorrichtung;

Fig. 2 ist eine Seitenansicht einer Regalstange eines Lagers der Komplettiervorrichtung;

Fig. 3 ist eine Frontansicht eines Regalstangenlagers.

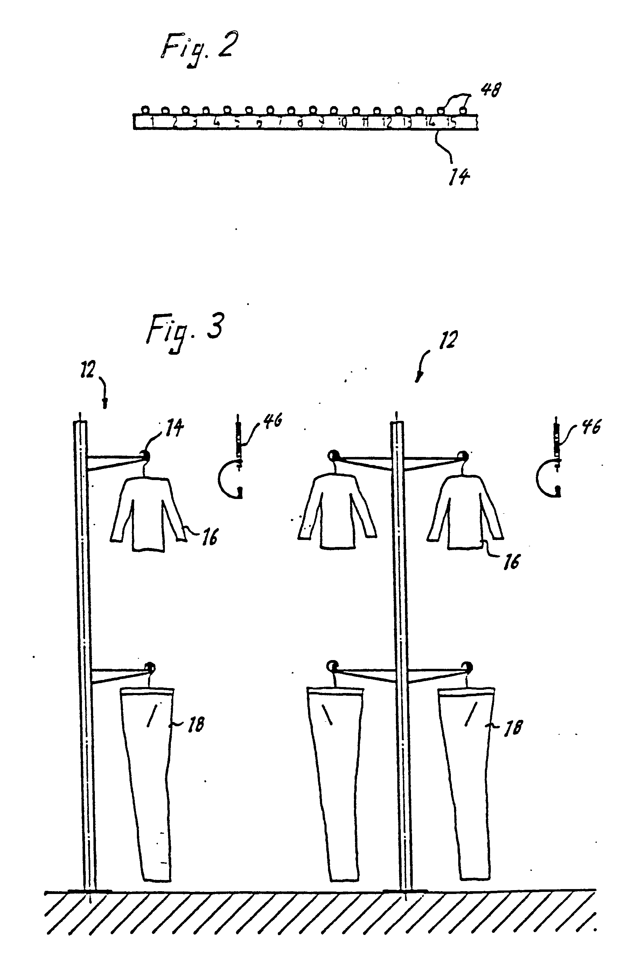

Eine Komplettiervorrichtung für Anzüge umfaßt ein Regalstangenlager 10 mit mehreren Gruppen 12 aus parallel angeordneten Regalstangen 14 zur Lagerung von Anzugjacken 16 oder -hosen 18. Die Regalstangen 14 sind gemäß Figur 2 durch aufgesetzte Kugelköpfe 48 in einzelne, fortlaufend numerierte Lagerplätze unterteilt. Zwischen den einzelnen Regalstangen-Gruppen 12 sind Gassen 20 gebildet. Diese Gassen einschließlich der von der betreffenden Gasse aus zugänglichen Regalstangen sollen nachfolgend als Abteilungen des Lagers bezeichnet werden.

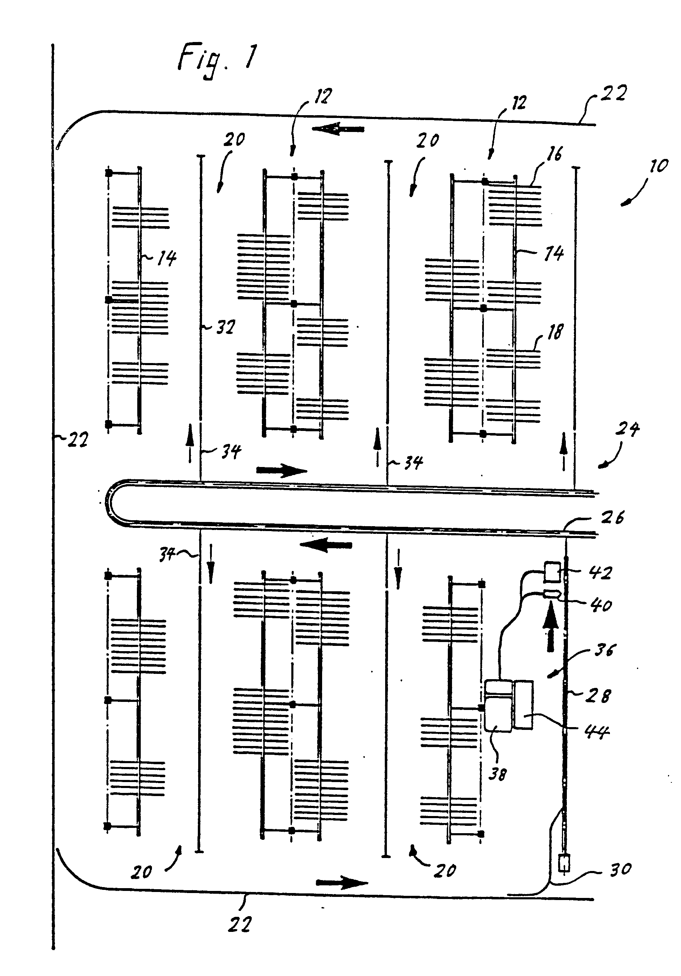

Ein Fördersystem zum Zuführen der Bekleidungsstücke zu dem Lager 10 umfaßt einen längs den Außenseiten des Lagers verlaufenden Förderer 22, einen in einem Mittelgang 24 des Lagers hin- und zurückverlaufenden Verteilerförderer 26 und einen Zwischenförderer 28, der den äußeren Förderer 22 mit dem Verteilerförderer 26 verbindet. Auf dem äußeren Förderer 22 sind nicht gezeigte Förderwagen in Pfeilrichtung in Figur 1 verfahrbar, die Anzugjacken oder Anzughosen tragen. Die Bekleidungsstücke werden durch eine Übergabevorrichtung 30 auf den Zwischenförderer 28 überführt und von diesem auf den Verteilerförderer 26 übertragen.

Die Gassen 20 des Lagers 10 werden von Förderwagen-Laufbahnen 32 durchlaufen, an denen Regalgassen-Förderwagen 46 (Figur 3) von Hand verfahrbar sind. Die Laufbahnen 32 sind über Ausschleusungsmechanismen 34 mit dem Verteilerförderer 26 verbunden. Auf dem Verteilerförderer zugeführte Förderwagen tragen jeweils eine Codierungseinheit, auf der elektronisch eine bestimmte Zielcodierung gespeichert ist. Die Ausschleusungsmechanismen 34 tasten die Zielcodierungen ab. Wenn die Zielcodierung mit der betreffenden Abteilung des Lagers übereinstimmt, wird das auf dem Förderwagen zugeführte Bekleidungsstück über eine Ablaufstange des Ausschleusungsmechanismus 34 auf den Regalgassen-Förderwagen überführt. Derartige Codierungs- und Ausschleusungssysteme sind für sich bekannt und sollen daher nicht im einzelnen beschrieben werden.

An dem Zwischenförderer 28 ist ein sogenannter Erfassungsplatz 36 angeordnet. Der Erfassungsplatz umfaßt eine elektronische Steuereinheit 38, an die eine opto-elektronische Abtastvorrichtung 40, eine Codierungseinheit 42 und ein Etikettendrucker 44 angeschlossen sind.

Die oben beschriebene Vorrichtung wird wie folgt zum komplettieren von Anzügen eingesetzt.

Als Beispiel soll angenommen werden, daß von einem bestimmten Anzug zunächst die Jacke 16 über den Förderer 22 zugeführt wird. Die Jacke 16 gelangt über die Obergabevorrichtung 30 auf den Zwischenförderer 28. Eine auf einem Produktionsetikett der Jacke angebrachte Markierung, die die Identifizierung der Jacke 16 gestattet, wird von einer Bedienungsposition mit Hilfe der beispielsweise als Lesepistole ausgebildeten Abtastvorrichtung 40 abgetastet. Die elektronische Steuereinheit 38 identifiziert die Jacke anhand der abgetasteten Markierung, registriert deren Eingang und überprüft, ob die zugehörige Hose bereits in dem Lager 10 eingelagert wurde. Da dies - wie angenommen - nicht der Fall ist, weist die Steuereinheit der Jacke 16 einen freien Lagerplatz in dem Lager 10 zu. Die Steuereinheit 38 bewirkt sodann über die Codierungseinheit 42 die Codierung eines Förderwagens des Verteilerförderers 26 mit der Adresse derjenigen Abteilung des Lagers, in der sich der ausgewählte Lagerplatz befindet. Gleichzeitig wird auf einen Befehl der Steuereinheit 38 durch den Etikettendrucker 44 ein Klebeetikett ausgedruckt, das die gewählte Abteilung des Lagers und den speziellen Lagerplatz innerhalb dieser Abteilung angibt. Das Klebeetikett wird von der Bedienungsperson auf die Jacke 16 aufgeklebt.

Die Jacke 16 gelangt sodann über den Verteilerförderer 26 in die vorgesehene Abteilung des Lagers und wird dort automatisch ausgeschleust und auf den Regalgassen-Förderwagen 46 überführt. Eine in der betreffenden Abteilung des Lagers tätige Bedienungsperson liest die auf dem Klebeetikett angegebene Nummer des Lagerplatzes und hängt die Jacke an der entsprechenden Stelle auf die Regalstange 14.

Wenn zu einem späteren Zeitpunkt die zugehörige Hose 18 über den Förderer 22 zugeführt wird und das Produktionsetikett der Hose mit Hilfe der Abtastvorrichtung 40 abgetastet wird, so erkennt die Steuereinheit 38, daß die zugehörige Jacke bereits eingelagert wurde und weist der Hose durch entsprechende Codierung des Förderwagens und Ausdruck eines entsprechenden Klebeetiketts den Lagerplatz der Jacke zu. Auf dem Klebeetikett wird zusätzlich eine Markierung ausgedruckt, die der Bedienungsperson im Lager anzeigt, daß die Jacke bereits eingelagert ist und der Anzug somit komplett ist. Die Kenndaten der Jacke und der Hose werden durch die Steuereinheit 38 gelöscht, so daß der freier Lagerplatz geführt wird.

Die Bedienungsperson im Lager kann anhand des Klebeetiketts der Hose sofort erkennen, an welchem Lagerplatz sich die zugehörige Jacke befindet, so daß Hose und Jacke unverzüglich gemeinsam in ein Fertigwarenlager transportiert werden können. Der Abtransport der komplettierten Anzüge kann beispielsweise mit Hilfe des Förderers 22 erfolgen, auf Förderwagen, die derart codiert sind, daß sie an der Weiche 30 durchgelassen werden.

Durch die erfindungsgemäße Vorrichtung wird somit der Komplettierungsvorgang teilweise automatisiert, so daß insbesondere das zeitraubende Vergleichen der identifizierenden Markierungen und das Heraussuchen der zusammengehörigen Teile von Hand entfällt. Es ergibt sich somit ein wesentlich geringerer Personal- und Zeitbedarf bei gleichzeitiger Verringerung der Lagerkapazität des Lagers 10. Darüber hinaus ermöglicht die Steuereinheit 38 im Bedarfsfall eine rasche Übersicht über den Lagerbestand und ein rasches Auffinden einzelner Teile in dem Zwischenlager.

Bei dem Lager der erfindungsgemäßen Vorrichtung muß es sich nicht notwendig um ein Regalstangenlager 10 der oben beschriebenen Art handeln. Zur Zwischenlagerung kann ein beliebiges Lagersystem eingesetzt werden, das eine Gliederung in Abteilungen und die Identifizierung einzelner Lagerplätze gestattet.

**Patentansprüche**

1. Vorrichtung zum Komplettieren von aus mehreren zusammengehörigen Teilen bestehenden Erzeugnissen mit
- einem in mehrere Abteilungen (20) gegliederten Lager (10) zur Zwischenlagerung der Teile (16, 18),
- einem Förderer (22, 26, 28) mit einer Anzahl von Förderwagen, auf denen die jeweils mit einer identifizierenden Markierung versehenen Teile einzeln in das Lager transportiert werden, und
- einer Anzahl von jeweils durch eine der Abteilungen des Lagers führenden, über Ausschleusungsmechanismen (34) mit dem Förderer verbundenen Förderwagen-Laufbahnen (32),

-wobei die Ausschleusungsmechanismen (34) durch an den Förderwagen angebrachte Codierungen steuerbar sind, <u>dadurch gekennzeichnet,</u>
- daß die Abteilungen (20) des Lagers (10) in einzelne Lagerplätze unterteilt sind,
- daß an dem Förderer (22, 26, 28) eine Abtastvorrichtung (40) zur Abtastung der Markierungen angeordnet ist,
- daß an die Abtastvorrichtung (40) eine elektronische Steuereinheit (38) angeschlossen ist, die den Teilen (16, 18) anhand der Markierung einen bestimmten Lagerplatz in einer bestimmten Abteilung des Lagers zuweist und die Förderwagen entsprechend codiert, und
- daß an die Steuereinheit (38) ein Etikettendrucker (44) zum Ausdrucken von den Lagerplatz angebenden Etiketten angeschlossen ist.

2. Vorrichtung nach Anspruch 1, <u>dadurch gekennzeichnet,</u> daß das Lager (10) ein Regalstangenlager für Bekleidungsstücke ist.

3. Vorrichtung nach Anspruch 2, <u>dadurch gekennzeichnet,</u> daß die Regalstangen (14) des Regalstangenlagers (10) jeweils auf der Oberseite mit in Abständen angeordneten Köpfen (48) zur Aufteilung in die einzelnen Lagerplätze versehen sind.

**Claims**

1. A device for fitting together articles comprising a number of parts belonging together, the device comprising
- a store (10) in a number of compartments (20) for temporarily storing the parts (16, 18),
- a conveyor (22, 26, 28) having a number of trucks, trolleys or the like, on which the parts identified by marking are individually conveyed to the store, and
- a number of truck rails (32) leading through one compartment of the store and connected by delivery mechanisms (34) to the conveyor,
- the delivery mechanisms (34) being actuated by codings marked on the trucks, characterised in that
- the compartments (20) of the store (10) are divided into individual storage places,
- a scanning device (40) for scanning the markings is disposed on the conveyor (22, 26, 28),
- an electronic control unit (38) is connected to the scanning device (40) and assigns the parts (16, 18) to a given storage place in a given department on the basis of the marking and codes the truck accordingly, and
- a label printer (44) is connected to the control unit (38) for printing labels stating the place in the store.

2. A device according to claim 1, characterised in that the store (10) is a shelf bar store for articles of clothing.

3. A device according to claim 2, characterised in that the bars (14) of the store (10) have spaced- apart heads (48) on top for dividing among the individual storage spaces.

**Revendications**

1. Installation pour le complètement de produits ou articles constitués en plusieurs parties composantes correspondantes, comprenant

un magasin (10) partagé en plusieurs subdivisions (20) pour le stockage intermédiaire des parties (16, 18),

un convoyeur de transport (22, 26, 28), comprenant un certain nombre de chariots de transport sur lesquels les parties composantes, chacune pourvue d'une marque d'identification, sont transportées individuellement dans le magasin,

un certain nombre de pistes de roulement pour des chariots de transport (32) passant par l'une des subdivisions du magasin, ces pistes étant reliées au convoyeur de transport par l'intermédiare de mécanismes d'éclusage (34), et

les mécanismes d'éclusage (34) pouvant être commandés par des codages disposés sur les chariots de transport, caractérisée en ce que:

les subdivisions (20) du magasin (10) sont partagées en emplacements de stockage individuels,

le convoyeur de transport (22, 26, 28) porte un dispositif de lecture (40) pour explorer les marques,

une unité de commande électronique (38) est reliée au dispositif d'exploration (40), ladite unité indiquant aux parties composantes (16, 18), d'après leurs marques, un emplacement de stockage déterminé dans une subdivision déterminée du magasin et codant les chariots de transport de façon correspondante, et

une imprimante d'étiquettes (44) est raccordée à l'unité de commande (38), pour imprimer des étiquettes indiquant l'emplacement dans le magasin.

2. Installation selon la revendication 1, caractérisée en ce que le magasin (10) est un magasin à perches de rangement pour pièces d'habillement.

3. Installation selon la revendication 2, caractérise en ce que les tiges supports (14) du magasin (10) à perches de rangement sont chaque fois pourvues, du côté supérieur, de têtes de patères (48) disposées avec écartement pour former les emplacements de magasinage individuels.

Fig. 1

*Fig. 2*

*Fig. 3*